# EUROPÄISCHE PATENTSCHRIFT

(11) **EP 1 853 526 B1**
(45) Veröffentlichungstag und Bekanntmachung des Hinweises auf die Patenterteilung: **10.12.2008**
(21) Anmeldenummer: 05715705.9
(22) Anmeldetag: 03.03.2005
(51) Int. Cl.: C03B 23/20, C03B 23/207

(54) **VERFAHREN ZUM FÜGEN VON WIEDER VONEINANDER LÖSBAREN GLASKÖRPERN**
METHOD FOR JOINING GLASS BODIES WHICH MAY BE RESEPARATED
PROCEDE D'ASSEMBLAGE AMOVIBLE DE CORPS DE VERRE

(43) Veröffentlichungstag der Anmeldung: 14.11.2007
(73) Patentinhaber: Gantenbrink, Rudolf, 81925 München (DE)
(72) Erfinder: Gantenbrink, Rudolf, 81925 München (DE)
(74) Vertreter: Grünecker, Kinkeldey, Stockmair & Schwanhäusser Anwaltssozietät
(86) Internationale Anmeldenummer: PCT/EP2005/002252
(87) Internationale Veröffentlichungsnummer: WO 2006/092157

(56) Entgegenhaltungen:
- DE-A1- 10 209 990

## Beschreibung

Das Auftrennen eines Glaskörpers in zwei Teile geschieht heutzutage meist durch Vorsehen sog. Sollbruchstellen, die durch Anritzen oder dergleichen hergestellt werden. Problematisch, insbesondere bei dem Trennen von Hohlkörpern, die Flüssigkeiten umfassen, ist dabei eine mögliche Kontamination des Inhaltes durch das Auftreten von Glassplittern. Zwar kann das Risiko des Auftretens von Glassplittern durch geschicktes Konstruieren weitestgehend vermieden werden; bei sensiblen Inhalten von Glaskörpern möchte man jedoch das Splittern vollständig ausschließen. Wünschenswert ist dies beispielsweise auch bei einer auf den Anmelder der vorliegenden Patentanmeldung zurückgehenden Glasflasche mit einem Glasverschluß (DE 10209990), bei welcher die Splitterneigung bereits auf konstruktive Weise praktisch ausgeschlossen ist. Bei solchen Glasflaschen, bei denen der Verschluß ebenfalls aus Glas besteht und mit dem Flaschenkörper verschmolzen ist, besteht aber weiterhin auch noch das Bedürfnis, dass die Flasche leicht zu öffen ist und auch bei unsachgemäßem Umgang nicht zu Splittern führt.

Es ist daher Aufgabe der vorliegenden Erfindung, ein Verfahren zum Fügen von wieder voneinander lösbaren Glaskörpern zur Verfügung zu stellen, welches es ermöglicht, die beiden Glaskörper splitterfrei voneinander zu trennen und welches ferner die Möglichkeit gibt, die zum voneinander Lösen der beiden Glaskörper aufzuwendende Kraft einzustellen.

Diese Aufgabe wird erfindungsgemäss dadurch gelöst, dass vor dem Zusammenfügen der beiden Glaskörper auf zumindest eine der Fügeflächen eine Vielzahl scharfkantiger, nicht schmelzender Partikel aufgebracht werden.

Durch das Aufbringen dieser Fremdkörper wird einerseits vermieden, dass die Fügeflächen vollflächig miteinander verbunden werden. Es entstehen vielmehr kleine Bläschen, die die scharfkantigen Partikel umgeben. Die Struktur des Glases in der Fügeebene ist schwammförmig, wobei das Glas um die scharfkantigen Partikel herum kleine Brücken bildet. Die Partikel liegen mit ihren scharfen Kanten in den Glasbrücken, so dass beim Aufbringen einer Zugspannung auf die Fügeebene eine Vielzahl von Spannungsrissen entstehen, die zu einer Ausmuschelung beim Trennen der beiden Glaskörper führt, ohne dass Splitter entstehen. Durch die Anzahl und die Größe der scharfkantigen Partikel kann die aufzubringende Kraft zum Lösen der beiden Glaskörper voneinander gesteuert werden. Es ist auf diese Art und Weise möglich, definierte Kräfte zum Öffnen einer Ganzglasflasche mit Glasverschluss vorzusehen.

Gemäß einer bevorzugten Ausführungsform können auf den Fügeflächen beider Glaskörper Partikel aufgebracht werden. Auf diese Weise wird beim Zusammenfügen der Fügeflächen der beiden Glaskörper erreicht, dass die Partikel auch in die jeweils andere Fügefläche eindringen und hinterher im wesentlichen in der Fügeebene liegen.

Besonders vorteilhaft ist es auch, wenn die Größe der Partikel derart gewählt ist, dass diese vor dem Zusammenfügen der Glaskörper aus der Fügefläche, auf der sie aufgebracht sind, herausragen. Auch hierdurch wird erreicht, dass die Partikel in die jeweils andere Fügefläche eindringen.

Bevorzugt wird auch, wenn zwischen dem Aufbringen der Partikel und dem Zusammenfügen der Glaskörper die Fügefläche, auf der die Partikel aufgebracht sind, nicht mehr angeschmolzen wird. Auf diese Weise bleiben die durch das Eindrücken der Partikel in die Fügefläche entstehenden Vertiefungen erhalten, ohne die Partikel vollständig zu umschließen. Das Verhindern des nachträglichen erneuten Anschmelzens bewirkt, dass beim Zusammenfügen der beiden Glaskörper die die Partikel umgebenden Bläschen gebildet werden, in deren "Haut" die scharfen Kanten der Partikel hineinragen.

Insbesondere in Hinblick auf die wiederholbare Bestimmbarkeit der aufzubringenden Trennkräfte ist es weiter von Vorteil, wenn die Partikel gleichmäßig auf der mindestens einen Fügefläche verteilt aufgebracht werden. Hierbei bestimmen insbesondere die Größe und der Abstand der Partikel die aufzubringenden Trennkräfte. Beide Parameter beeinflussen sich gegenseitig.

Als besonders vorteilhaft hat sich herausgestellt, wenn man als Partikel Korund verwendet.

Im folgenden wird anhand einer schematischen Zeichnung das erfindungsgemäße Verfahren kurz erläutert. Es zeigen:
- Fig. 1: zwei Glaskörper in Form von zwei Glasstangen, die an ihren Fügeflächen angeschmolzen werden,
- Fig. 2: die beiden Glaskörper aus Fig. 1 nachdem auf die Fügeflächen Korundpartikel aufgebracht wurden, und
- Fig. 3: die beiden Glaskörper im zusammengefügten Zustand, und
- Fig. 4: die beiden Glaskörper im getrennten Zustand.

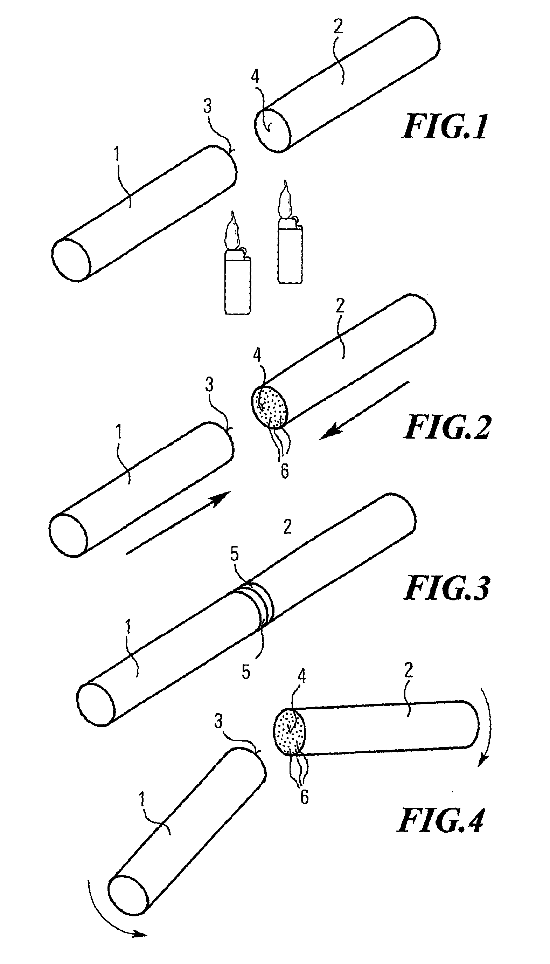

In der Fig. 1 sind zwei Glaskörper 1 und 2 in Form von Glasstangen dargestellt, die jeweils zueinander zugewandte Fügeflächen 3 und 4 aufweisen. Bei dem in Fig. 1 dargestellten Verfahrensschritt werden die beiden Fügeflächen 3 und 4 so lange erhitzt, bis das Glas an diesen Flächen anschmilzt.

Sodann wird auf mindestens eine der Fügeflächen 4 Korund in Form von einzelnen scharfkantigen Partikeln aufgebracht. Dies kann z.B. dadurch geschehen, dass die angeschmolzene Fügefläche in Korundpartikel 6 eingetaucht wird, oder dass Korundpartikel 6 aufgestreut werden.

Sodann werden die beiden Glaskörper 1 und 2 in Richtung der in Fig. 2 angedeuteten Pfeile aufeinander zubewegt und gefügt. Die beiden Glaskörper sind dann, wie in Fig. 3 ersichtlich, miteinander verbunden. In der Fügeebene 5 befinden sich nunmehr eine Vielzahl von Korundpartikel, die durch die Glasschmelze umschlossen sind. Allerdings ist die Glasschmelze derart viskos, dass die Korundpartikel 6 von kleinen Luftbläschen umgeben sind, in deren "Haut" die scharfen Kanten der Korundpartikel 6 einstechen. Dieses Einstechen wird dadurch noch unterstützt, dass das Glas beim Abkühlen sich zusammenzieht, während die Korundpartikel 6 in ihrer Größe fast unverändert bleiben. Um die beiden Glaskörper wieder voneinander zu lösen, wird auf die Fügeebene 5 eine Zugspannung aufgebracht, was beispielsweise dadurch geschehen kann, dass auf die beiden Hälften des zu erzeugenden Glasstabs eine Biegebeanspruchung aufgebracht wird, wie sie anhand der Pfeile in Fig. 4 angedeutet sind. Aufgrund der Vielzahl in der Trennebene 5 vorgesehenen scharfkantigen Partikel muschelt das Glas, d.h. es entstehen eine Vielzahl von kleinen kurzen Rissen, die insgesamt zu einem glatten Trennbruch führen, ohne dass Glas absplittert.

## Patentansprüche

1. Verfahren zum Fügen von wieder voneinander lösbaren Glaskörpern (1 und 2), bei dem die zu verbindenden Glaskörper an komplementären Fügeflächen (3, 4) angeschmolzen und anschließend zusammengefügt werden, **dadurch gekennzeichnet, dass** vor dem Zusammenfügen auf zumindest eine der Fügeflächen (4) eine Vielzahl von scharfkantigen, nicht schmelzenden Partikel aufgebracht werden.

2. Verfahren nach Anspruch 1, **dadurch gekennzeichnet, dass** die Partikel (6) auf die Fügeflächen (3, 4) beider Glaskörper (1) aufgebracht werden.

3. Verfahren nach Anspruch 1 oder 2, **dadurch gekennzeichnet, dass** die Größe der Partikel (6) derart gewählt ist, dass diese vor dem Zusammenfügen der Glaskörper (1, 2) aus der Fügefläche (4), auf der sie aufgebracht sind, herausragen.

4. Verfahren nach einem der Ansprüche 1 bis 3, **dadurch gekennzeichnet, dass** zwischen dem Aufbringen der Partikel (6) und dem Zusammenfügen der Glaskörper (1, 2) die Fügefläche (4), auf der die Partikel (6) aufgebracht sind, nicht mehr angeschmolzen wird.

5. Verfahren nach einem der Ansprüche 1 bis 4, **dadurch gekennzeichnet, dass** die Partikel (6) gleichmäßig auf der mindestens einen Fügefläche (4) verteilt aufgebracht werden.

6. Verfahren nach einem der Ansprüche 1 bis 5, **dadurch gekennzeichnet, dass** als Partikel (6) Korund verwendet wird.

## Claims

1. Method of joining glass bodies (1 and 2) which can be separated from one another again, whereby the glass bodies to be joined are melted at complementary joint surfaces (3, 4) and then joined, **characterised in that** prior to joining, a plurality of sharp-edged, non-melting particles is applied to at least one of the joint surfaces (4).

2. Method as claimed in claim 1, **characterised in that** the particles (6) are applied to the joint surfaces (3, 4) of both glass bodies (1).

3. Method as claimed in claim 1 or 2, **characterised in that** the size of the particles (6) is selected so that they project out from the joint surface (4) to which they have been applied prior to the process of joining the glass bodies (1, 2).

4. Method as claimed in one of claims 1 to 3, **characterised in that** the joint surface (4) to which the particles (6) are applied is no longer melted between applying the particles (6) and joining the glass bodies (1, 2).

5. Method as claimed in one of claims 1 to 4, **characterised in that** the particles are applied to the at least one joint surface (4) in a uniform distribution.

6. Method as claimed in one of claims 1 to 5, **characterised in that** corundum is used for the particles (6).

## Revendications

1. Procédé pour assembler des corps en verre (1 et 2) aptes à être détachés l'un de l'autre, selon lequel on fait fondre au niveau de surfaces d'assemblage complémentaires (3, 4) les corps en verre à relier, puis on assemble ceux-ci, **caractérisé en ce qu'**avant l'assemblage, on applique sur l'une au moins des surfaces d'assemblage (4) un grand nombre de particules à arêtes vives qui ne fondent pas.

2. Procédé selon la revendication 1, **caractérisé en ce que** les particules (6) sont appliquées sur les surfaces d'assemblage (3, 4) des deux corps en verre (1).

3. Procédé selon la revendication 1 ou 2, **caractérisé en ce que** la taille des particules (6) est choisie pour que celles-ci, avant l'assemblage des corps en verre (1, 2), dépassent de la surface d'assemblage (4) sur laquelle elles sont appliquées.

4. Procédé selon l'une des revendications 1 à 3, **caractérisé en ce qu'**entre l'application des particules (6) et l'assemblage des corps en verre (1, 2), on ne fait plus fondre la surface d'assemblage (4) sur laquelle les particules (6) sont appliquées.

5. Procédé selon l'une des revendications 1 à 4, **caractérisé en ce que** les particules (6) sont appliquées en étant réparties uniformément sur la ou les surfaces d'assemblage (4).

6. Procédé selon l'une des revendications 1 à 5, **caractérisé en ce qu'**on utilise comme particules (6) du corindon.
